# EUROPÄISCHE PATENTANMELDUNG

(11) **EP 1 967 257 A2**
(43) Veröffentlichungstag der Anmeldung: **10.09.2008**
(21) Anmeldenummer: 08004104.9
(22) Anmeldetag: 05.03.2008
(51) Int. Cl.: B01F 3/04, B01F 5/04, B01F 15/00, E03C 1/046

(54) **Vorrichtung zum Begasen von Leitungswasser**

(30) Priorität: 05.03.2007 DE 202007003204 U
(71) Anmelder: DS-Produkte Dieter Schwarz GmbH, 22145 Stapelfeld (DE)
(72) Erfinder: Rann, Michael, 21037 (DE); Trumpler, Joakim, 23560 Lübeck (DE)
(74) Vertreter: Glawe, Delfs, Moll

(57) **Zusammenfassung**

Gegenstand der Erfindung ist eine Vorrichtung zum Begasen von Leitungswasser im Zulauf einer Haushaltsarmatur (16), mit einem Anschluss (12) für eine Gasquelle und einer Einrichtung (8) zum Zuführen des Gases in den Leitungswasserstrom. Erfindungsgemäß sind folgende Merkmale vorgesehen:
a. die Vorrichtung ist als eine unterbaufähige Einheit ausgebildet, die einen Wassereinlass, einen Gaseinlass, und einen Auslass für das Wasser bzw. begaste Wasser aufweist,
b. sie weist einen der Wasserleitung zugeordneten Drucksensor (4) aus, der zur Abgabe eines ersten Steuersignals ausgebildet ist, wenn der Wasserdruck einen vorgegebenen Schwellwert unterschreitet,
c. sie weist eine Steuereinheit zur Freigabe der Gaszufuhr auf, die zur Ansteuerung der Einrichtung zum Zuführen des Gases in den Leitungswasserstrom ausgebildet ist, sobald sie mit dem ersten Steuersignal des Drucksensors und einem zusätzlichen zweiten Steuersignal beaufschlagt wird.

## Beschreibung

Die Erfindung betrifft eine Vorrichtung zum Begasen von Leitungswasser im Zulauf einer Haushaltsarmatur, mit einem Anschluss für eine Gasquelle und eine Einrichtung zum Zuführen des Gases in den Leitungswasserstrom.

Die Gaszufuhr in Leitungswasser, insbesondere das Karbonisieren von Leitungswasser mit CO₂, sind aus offenkundiger Vorbenutzung bekannt. Auf diese Weise wird aus Leitungswasser kohlensäurehaltiges Sprudelwasser hergestellt. In der Regel geschieht dies Portionsweise (Flaschenweise) in einem entsprechenden Karbonisator.

Gleichfalls aus offenkundiger Vorbenutzung ist es bekannt, einen Karbonisator bereits im Zulauf eines Leitungswasserhahns zu installieren, so dass aus diesem Wasserhahn nach dem Öffnen karbonisiertes Leitungswasser austritt.

Der Erfindung liegt die Aufgabe zugrunde, eine Vorrichtung der eingangs genannten Art zu schaffen, die einfach handhabbar und vielseitig verwendbar ist, sowie mit geringem Aufwand eine Nachrüstung bestehender Haushaltsarmaturen zwecks Begasung des Leitungswassers ermöglicht.

Die Erfindung löst diese Aufgabe bei einer Vorrichtung gemäß dem Oberbegriff des Anspruchs 1 durch folgende Merkmale:
a. die Vorrichtung ist als eine unterbaufähige Einheit ausgebildet, die einen Wassereinlass, einen Gaseinlass, und einen Auslass für das Wasser bzw. begaste Wasser aufweist,
b. sie weist einen der Wasserleitung zugeordneten Drucksensor aus, der zur Abgabe eines ersten Steuersignals ausgebildet ist, wenn der Wasserdruck einen vorgegebenen Schwellwert unterschreitet,
c. sie weist eine Steuereinheit zur Freigabe der Gaszufuhr auf, die zur Ansteuerung der Einrichtung zum Zuführen des Gases in den Leitungswasserstrom ausgebildet ist, sobald sie mit dem ersten Steuersignal des Drucksensors und einem zusätzlichen zweiten Steuersignal beaufschlagt wird.

Zunächst seien einige im Rahmen der Erfindung verwendete Begriffe erläutert. Der Begriff Haushaltsarmatur umfasst jegliche gebräuchliche Wasserzapfstelle für den Haushaltsbereich, die Gastronomie und den gewerblichen Küchenbereich.

Die Vorrichtung ist zum Begasen von Leitungswasser im Zulauf dieser Haushaltsarmatur ausgebildet. Dies bedeutet, dass das Leitungswasser bei aktivierter Vorrichtung bereits begast aus der Armatur austritt.

Die Vorrichtung weist eine Einrichtung zum Zuführen des Gases in den Leitungswasserstrom auf. Dies bedeutet, dass die Gaszufuhr bei geöffneter Armatur während des Wasserflusses stattfinden kann. Die Formulierung schließt nicht aus, dass Mischbehälter wie beispielsweise Besprudelung skammern, Karbonisierungskammern oder dergleichen verwendet werden.

Die erfindungsgemäße Vorrichtung ist als eine unterbaufähige Einheit ausgebildet. Dies bedeutet, dass die Abmessungen dieser Einheit hinreichend klein sind, dass sie im Bereich unterhalb einer in üblicher Höhe installierten Haushaltsarmatur installiert werden kann, beispielsweise im Schrank unterhalb einer Spüle.

Der vorgesehene Drucksensor ist einer Wasserleitung zugeordnet, vorzugsweise einem innerhalb der unterbaufähigen Einheit angeordneten Leitungsabschnitt, vorzugsweise einem Abschnitt stromauf derjenigen Stelle der Wasserleitung, an der die Gaszufuhr erfolgt. "Zugeordnet" bedeutet, dass er zur Messung des Wasserdruckes in diesem Leitungsabschnitt ausgebildet ist.

Die Steuereinheit zur Freigabe der Gaszufuhr gibt diese Gaszufuhr nur dann frei, wenn sie sowohl mit dem ersten Steuersignal des Drucksensors als auch einem zusätzlichen zweiten Steuersignal beaufschlagt wird. Dies kann beispielsweise in Form einer im Stand der Technik bekannten UND-Schaltung geschehen.

Die erfindungsgemäße Vorrichtung kann in eine vorhandene Hauswasserinstallation integriert werden und erlaubt nach dem Einbau wahlweise die Abgabe von unbegastem oder begastem Wasser aus der Haushaltsarmatur.

Wird das Ventil oder der Hahn der Haushaltsarmatur geöffnet, sinkt der Wasserdruck in der Wasserzufuhrleitung. Der vorgegebene Schwellwert des Drucksensors wird so eingestellt, dass er beim Öffnen des Wasserhahns (ggf. auch nur beim Öffnen des Wasserhahns ab einer bestimmten Mindestdurchflussmenge) unterschritten wird und damit der Drucksensor bei diesem Öffnen des Wasserhahns das erste Steuersignal abgibt.

Dieses erste Steuersignal ist eine notwendige, aber keine hinreichende Bedingung zum Auslösen der Gaszufuhr. Mittels dieses ersten Steuersignals wird sichergestellt, dass eine Gaszufuhr grundsätzlich nur bei geöffnetem Wasserhahn stattfinden kann.

Damit aber bei geöffnetem Wasserhahn tatsächlich eine Begasung stattfindet, muss zusätzlich eine Beaufschlagung mit dem zweiten Steuersignal erfolgen. Mittels dieses zweiten Steuersignals entscheidet der Benutzer, ob beim Öffnen des Wasserhahns eine Begasung stattfinden soll oder nicht.

Die Begasung ist im Rahmen der Erfindung vorzugsweise eine Karbonisierung, das verwendete Gas also vorzugsweise CO₂. Jedoch ist auch beispielsweise eine Sauerstoffanreicherung des Wassers denkbar. Als Gasquelle wird bevorzugt ein Speicherbehälter wie beispielsweise eine Druckgasflasche verwendet. Der Speicherbehälter kann vorzugsweise in die unterbaufähige Einheit integrierbar sein, diese ist also dann zur Aufnahme der Gasflasche (beispielsweise der CO₂-Flasche) ausgebildet.

Bevorzugt weist die Einrichtung zum Zuführen des Gases in den Leitungswasserstrom eine Besprudelungskammer auf, in der sich eine große Kontaktfläche zwischen Gas- und Wasserphase ausbildet und somit eine intensive Begasung stattfinden kann. Zur Intensivierung insbesondere einer Karbonisierung kann ein aus dem Stand der Technik bekannter Karbonisierer verwendet werden.

Die erfindungsgemäße Vorrichtung kann zum Empfangen eines zusätzlichen zweiten Steuersignals von einer externen zusätzlichen Steuereinheit ausgebildet sein. Mittels dieser externen Steuereinheit entscheidet der Benutzer, ob beim Öffnen des Wasserhahns eine Begasung stattfindet. Sie kann beispielsweise im Bereich der Armatur angeordnet sein, und einen Taster aufweisen, durch dessen Druck das zweite Steuersignal aktiviert wird. Dabei kann vorgesehen sein, dass das zweite Steuersignal nur für die Dauer des Drucks auf den Taster ausgelöst wird. Bei dieser Ausführungsform kann der Benutzer bei laufendem Wasser durch Druck auf den Taster die Begasung starten und wieder beenden.

Alternativ kann vorgesehen sein, dass ein einmaliger kurzer Druck auf den Taster das zweite Steuersignal auslöst und hält. Dieses zweite Steuersignal kann dann beispielsweise so lange anliegen, bis der Wasserhahn wieder geschlossen wird und damit der Drucksensor die Abgabe des ersten Steuersignals beendet.

Ferner kann vorgesehen sein, dass bei einem Druck auf den Taster bei noch geschlossenem Wasserhahn das zweite Steuersignal zunächst mit einer vorgegebenen Zeitkonstante von beispielsweise 5-30 s, vorzugsweise 5-15 s, gespeichert wird. Wird innerhalb dieses vorgegebenen Zeitraums der Wasserhahn geöffnet, empfängt die Steuereinheit zur Freigabe der Gaszufuhr sowohl das erste Steuersignal des Drucksensors als auch das mit der vorgegebenen Zeitkonstante gespeicherte zweite Steuersignal und gibt die Gaszufuhr frei. Wird nach dem Drücken des Tasters der Wasserhahn nicht innerhalb der vorgegebenen Zeitkonstante geöffnet, verfällt das zweite Steuersignal und beim Öffnen des Wasserhahns liegt an der Steuereinheit zur Freigabe der Gaszufuhr lediglich das erste Steuersignal an, so dass keine Begasung stattfindet.

Die Vorrichtung kann zum drahtlosen Empfangen des zusätzlichen zweiten Steuersignals von einer externen zusätzlichen Steuereinheit ausgebildet sein. Diese Ausführungsform kommt ohne Kabelverbindung zwischen der als unterbaufähige Einheit ausgebildeten Vorrichtung und der zusätzlichen Steuereinheit aus und vermeidet daher, dass beispielsweise in Arbeitsplatten Bohrungen vorgenommen werden müssen.

Bei einer bevorzugten Ausführungsform der Erfindung kann der Drucksensor zur Abgabe des zusätzlichen zweiten Steuersignals ausgebildet sein, wenn er eine vorgegebene Druckabfolge erfährt. Diese vorgegebene Druckabfolge kann beispielsweise darin bestehen, den Wasserhahn zunächst für einen kurzen Zeitraum (beispielsweise 0,5 - 10 s, vorzugsweise 0,5 - 5 s, weiter vorzugsweise 1 - 3 s, bevorzugt etwa 2 s)zu öffnen. Anschließend wird der Wasserhahn für einen kurzen Zeitraum (vorzugsweise etwa 0,2 - 2 s) geschlossen und dann sofort wieder geöffnet. Diese Druckabfolge oder Drucksequenz bewirkt, dass der Drucksensor bzw. eine dem Drucksensor zugeordnete Auswerteeinrichtung zur Erfassung dieser Druckabfolge das zweite Steuersignal abgibt, so dass nach dem zweiten Öffnen des Wasserhahns eine Besprudelung stattfindet.

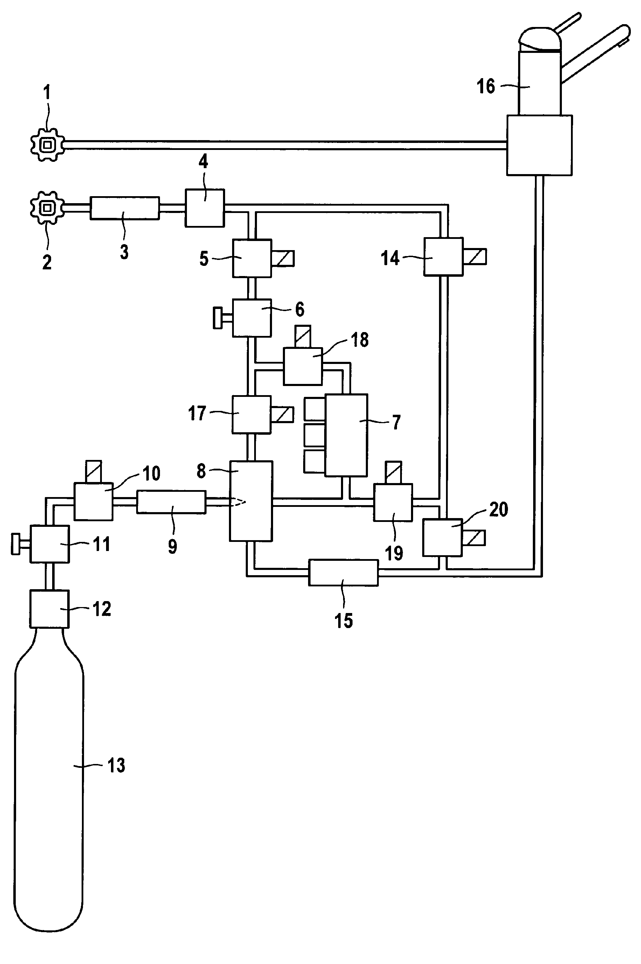

Ein Ausführungsbeispiel der Erfindung wird im folgenden anhand der Zeichnung beschrieben, die schematisch den Aufbau einer erfindungsgemäßen Vorrichtung zeigt.

Ein Warmwasserzulauf 1 ist unmittelbar mit einem Wasserhahn (Haushaltsarmatur) 16 verbunden. Zwischen dem Kaltwasserzulauf 2 und dem Wasserhahn 16 ist die als unterbaufähige Einheit ausgebildete erfindungsgemäße Vorrichtung eingebaut.

Diese Vorrichtung weist an dem an den Kaltwasserzulauf 2 angeschlossenen Eingang zunächst ein Rückschlagventil 3 auf, das den Rücklauf von behandeltem Wasser in die Frischwasserleitung verhindert. Der Drucksensor 4 misst den Wasserdruck in der Leitung und ist zur Abgabe des ersten Steuersignals ausgebildet, wenn dieser Druck unter einen Schwellwert sinkt, der typischerweise beim Öffnen des Wasserhahns 16 unterschritten wird.

Die Vorrichtung weist sechs elektrisch ansteuerbare Ventile 5, 14, 17, 18, 19 und 20 auf, mit denen der Wasserfluss auf unten noch näher erläuterte Weise gesteuert werden kann.

Bei einer ersten Betriebsart wird unbehandeltes kaltes Wasser entnommen. Bei dieser Betriebsart ist das Ventil 5 geschlossen und die Ventile 14, 20 geöffnet. Das Wasser kann jetzt durch den von den Ventilen 14, 20 geöffneten Zweig der Vorrichtung unmittelbar zum Wasserhahn 16 strömen und dort entnommen werden. Ein Rückschlagventil 15 verhindert, dass bei dieser Betriebsart Wasser in die Besprudlungskammer 8 zurückschlagen kann.

Bei einer zweiten Betriebsart sind die Ventile 14 und 18 geschlossen, die Ventile 5, 17 und 19 sind geöffnet. Das Kaltwasser strömt jetzt durch das geöffnete Ventil 5 und den (fakultativen Druckminderer 6) sowie das Ventil 17 in die Besprudelungskammer 8. In der Besprudelungskammer 8 wird CO₂ aus einem CO₂ Zylinder 13 zugeführt, der an eine Zylinderaufnahme 12 der Vorrichtung angeschlossen ist. Das gasförmige CO₂ durchströmt einen Druckreduzierer 11, ein elektrisch ansteuerbares Gasventil 10 gibt die CO₂ Zufuhr über das aus Sicherheitsgründen vorgesehene Rückschlagventil 9 in die Besprudelungskammer 8 frei. In der Besprudelungskammer 8 mischen sich das zugeführte CO₂ und das über das Ventil 17 zugeführte Wasser. Aus dem Wasserhahn 16 kann bei dieser Betriebsart karbonisiertes Wasser entnommen werden.

Bei einer dritten Betriebsart, die im Rahmen der Erfindung nicht zwingend sondern lediglich fakultativ ist, kann aus dem Wasserhahn 16 entnommenes Wasser mittels einer Anschlussplattform 7 auch anderweitig behandelt werden. Bei dieser dritten Betriebsart sind die Ventile 5, 18 und 19 geöffnet und die Ventile 14 sowie 17 geschlossen. Das Wasser strömt durch die Ventile 5 und 18 in die Anschlussplattform 7. An diese Anschlussplattform 7 können verschiedene zusätzliche Wasserbehandlungseinrichtungen angeschlossen werden. Beispielhaft genannt seien ein Aktivkohleblock zur Filterung des Wassers und Entfernung insbesondere organischer Schadstoffe, eine UV-Quelle zur Entkeimung des Wassers mittels UV-Strahlung, eine Kühlvorrichtung, ein Ionenaustauscher zur Entkalkung des Wassers, Zufuhreinrichtungen für Zusatzstoffe wie beispielsweise Getränkesirup oder dergleichen.

Im eingebauten und betriebsbereiten Zustand nimmt die Vorrichtung als Normalfall den ersten Betriebszustand (Default-Betriebszustand) an. Beim Öffnen des Wasserhahns 16 strömt das Kaltwasser somit durch das Ventil 14 unmittelbar und unbehandelt aus dem Wasserhahn 16. Der Drucksensor 4 gibt beim Öffnen des Wasserhahns 16 aufgrund des Unterschreitens des Druckschwellwertes das erste Steuersignal ab, es kommt aber zu keiner Karbonisierung, da das zweite Steuersignal fehlt.

Wird der Wasserhahn 16 für etwa 2 s geöffnet, kurz (etwa 0,5 - 2 s) wieder geschlossen und dann sofort ein zweites Mal geöffnet, wird der Drucksensor 4 mit einer entsprechenden Druckabfolge beaufschlagt. Eine in der Zeichnung nicht dargestellte elektronische Steuereinheit zeichnet diese Druckabfolge auf; sie bewirkt, dass in dieser Steuereinheit das zweite Steuersignal generiert wird. Nach dem zweiten Öffnen des Wasserhahns 16 liegen in dieser Steuereinheit jetzt sowohl das erste als auch das zweite Steuersignal an. Die Steuereinheit schließt jetzt das Ventil 14 und öffnet die Ventile 5, 17. Ferner wird das Gasventil 10 geöffnet. In der Besprudelungskammer 8 wird das durchströmende Wasser mit Kohlendioxid versetzt. Die Lösung des Kohlendioxids im Wasser wird im Karbonisierer 15 intensiviert und aus dem Wasserhahn 16 strömt jetzt karbonisiertes Leitungswasser.

Alternativ kann das zweite Steuersignal von einer externen Einheit (Fernbedienung) generiert werden.

Die dritte Betriebsart ist im Rahmen der Erfindung lediglich fakultativ, die entsprechenden Vorrichtungen können bei einer erfindungsgemäßen Vorrichtung wahlweise vorhanden sein. In der Regel wird die dritte Betriebsart durch zusätzliche Steuersignale aus einer separaten Steuereinheit (Fernbedienung) ausgelöst werden.

Schließlich ist als vierte Betriebsart noch ein Reinigungsbetrieb der Besprudlungskammer 8 möglich. Bei dieser Betriebsart ist es möglich, zu Reinigungszwecken den Karbonisator auch von einem Ausgang her mit Wasser zu beaufschlagen. Bei dieser Betriebsart sind die Ventile 5 und 20 geschlossen, die Ventile 14 und 19 geöffnet. Wasser strömt dann durch die Ventile 14 und 19 in die Besprudlungskammer, reinigt diese und tritt über das Rückschlagventil 15 wieder aus.

## Patentansprüche

1. Vorrichtung zum Begasen von Leitungswasser im Zulauf einer Haushaltsarmatur (16), mit einem Anschluss (12)für eine Gasquelle und einer Einrichtung (8) zum Zuführen des Gases in den Leitungswasserstrom, **gekennzeichnet durch** folgende Merkmale:
a. die Vorrichtung ist als eine unterbaufähige Einheit ausgebildet, die einen Wassereinlass, einen Gaseinlass, und einen Auslass für das Wasser bzw. begaste Wasser aufweist,
b. sie weist einen der Wasserleitung zugeordneten Drucksensor (4) aus, der zur Abgabe eines ersten Steuersignals ausgebildet ist, wenn der Wasserdruck einen vorgegebenen Schwellwert unterschreitet,
c. sie weist eine Steuereinheit zur Freigabe der Gaszufuhr auf, die zur Ansteuerung der Einrichtung zum Zuführen des Gases in den Leitungswasserstrom ausgebildet ist, sobald sie mit dem ersten Steuersignal des Drucksensors und einem zusätzlichen zweiten Steuersignal beaufschlagt wird.

2. Vorrichtung nach Anspruch 1, **dadurch gekennzeichnet, dass** das Gas CO₂ ist.

3. Vorrichtung nach Anspruch 1 oder 2, **dadurch gekennzeichnet, dass** die Gasquelle ein Speicherbehälter (13) ist.

4. Vorrichtung nach Anspruch 3, **dadurch gekennzeichnet, dass** der Speicherbehälter (13) in die unterbaufähige Einheit integrierbar ist.

5. Vorrichtung nach einem der Ansprüche 1 bis 4, **dadurch gekennzeichnet, dass** die Einrichtung zum Zuführen des Gases in den Leitungswasserstrom eine Besprudelungskammer (8) aufweist.

6. Vorrichtung nach einem der Ansprüche 1 bis 5, **dadurch gekennzeichnet, dass** sie zum Empfang eines zusätzlichen zweiten Steuersignals von einer externen zusätzlichen Steuereinheit ausgebildet ist.

7. Vorrichtung nach Anspruch 6, **dadurch gekennzeichnet, dass** sie zum drahtlosen Empfang eines zusätzlichen zweiten Steuersignals von einer externen zusätzlichen Steuereinheit ausgebildet ist.

8. Vorrichtung nach einem der Ansprüche 1 bis 5, **dadurch gekennzeichnet, dass** der Drucksensor (4) zur Abgabe des zusätzlichen zweiten Steuersignals ausgebildet ist, wenn er eine vorgegebene Druckabfolge erfährt.
